# NEUE EUROPÄISCHE PATENTSCHRIFT

(11) **EP 0 626 306 B2**
(45) Veröffentlichungstag und Bekanntmachung des Hinweises auf die Entscheidung über den Einspruch: **05.12.2001**
(45) Hinweis auf die Patenterteilung: 04.11.1998
(21) Anmeldenummer: 94107460.1
(22) Anmeldetag: 13.05.1994
(51) Int. Cl.: B62D 6/02

(54) **Servolenkvorrichtung**
Power steering mechanism
Mécanisme pour direction assistée

(30) Priorität: 28.05.1993 DE 4317818
(43) Veröffentlichungstag der Anmeldung: 30.11.1994
(73) Patentinhaber: TRW Fahrwerksysteme GmbH & Co. KG, 40547 Düsseldorf (DE)
(72) Erfinder: Eberhart, Eugen, Dipl.-Ing., D-40223 Düsseldorf (DE)
(74) Vertreter: Stenger, Watzke & Ring Patentanwälte

(56) Entgegenhaltungen:
- WO-A-94/00329
- DE-C- 4 201 311

## Beschreibung

Gegenstand der Erfindung ist eine Servolenkvorrichtung zum Zuführen von Drucköl an linke und rechte Kammern eines Servozylinders über ein Drehschieberventil mit einer Pumpe, wobei zwischen einer Eingangswelle und einer Steuerhülse des Drehschieberventiles ein auf der Vorderseite mit einem Rücklaufdruck beaufschlegbarer Reaktionskolben eingeschaltet ist, der axial beweglich und drehfest auf der Eingangswelle gelagert und über eine elastische Drehmitnahme mit der Steuerhülse verbunden ist, wobei auf der Rückseite eines Abdichtkolbens in der Eingangswelle eine Leckölbohrung angeordnet ist.

Eine Servolenkvorrichtung der vorstehend beschriebenen Gattung ist aus der US-PS 4 819 545 bekannt. Diese Servolenkeinrichtung hat sich zwar in der Praxis bewährt, hat aber den Mangel, daß der Fahrbahnkontakt nicht nur bei einer sehr geringen Fahrzeuggeschwindigkeit, beispielsweise beim Einparken, bis auf eine durch einen Drehstab eingestellte, mechanische Grundlast aufgehoben wird, sondern insbesondere bei erhöhter Fahrzeuggeschwindigkeit im Vergleich zu einer manuellen Lenkung praktisch aufgehoben ist.

Aus den DE 40 26 163 A1 und 41 19 913 A1 sind verschiedene hydraulische Servolenkvorrichtungen mit geschwindigkeitsabhängiger Steuerung bzw. Regelung der Lenkkräfte allgemein bekannt.

Eine gattungsgemäße Vorrichtung ist aus der DE-PS 42 01 311 bekannt, bei welcher der Reaktionskolben mit einer Druckfeder beaufschlagt ist. Zur Schaffung einer einfach konstruierten hydraulischen Reaktionseinrichtung wird in eine Leitung zwischen der Pumpe und der mit der Druckfeder belasteten Rückseite des Reaktionskolbens ein Verhältnisdruckregelventil zur Reduzierung des Systemdruckes auf einen geringeren Reaktionsdruck sowie Blenden zur geschwindigkeitsabhängigen Regelung eines hydraulischen Rückwirkmomentes und eines Rücklaufdruckes verwendet. Diese vorbekannte Servolenkvorrichtung umfaßt eine Vielzahl von aufeinander abzustimmender Bauteile, um das Rückwirkmoment zu regeln. Damit wird die vorbekannte Vorrichtung hinsichtlich der Montage, der Einstellung und der Wartung aufwendig. Darüber hinaus leidet die Regelungsgenauigkeit.

Davon ausgehend liegt der Erfindung die **Aufgabe** zugrunde, für eine gattungsgemäße Servolenkvorrichtung eine einfach konstruierte hydraulische Reaktionseinrichtung dahingehend zu verbessern, daß diese hinsichtlich der verwendeten Bauteile vereinfacht und wirtschaftlicher einsetzbar wird, wobei die Regelung verbessert wird, so daß die Lenkkraft in Abhängigkeit von Parametern wie beispielsweise der Fahrzeuggeschwindigkeit genauer geregelt werden kann, um insbesondere bei erhöhter Fahrzeuggeschwindigkeit ein verbessertes Lenkgefühl zu erzielen.

Als technische **Lösung** wird dafür vorgeschlagen, daß der Reaktionskolben auf einer Rückseite mit parameterabhängig geregeltem Reaktionsdruck beaufschlagbar und in eine Leitung zwischen der Pumpe und der Rückseite des Reaktionskolbens ein elektrohydraulischer Wandler (EHW) zur Regelung des Reaktionsmomentes durch das Verhältnis von Rücklaufdruck und geregeltem Reaktionsdruck eingeschaltet ist.

Als elektrohydraulischer Wandler kann z.B. ein Proportionalmagnet in Verbindung mit einer Nadeldrossel dienen.

In weiterer Ausgestaltung der Erfindung wird vorgeschlagen, zwischen der dem EHW nachgeordneten Leitung zur Rückseite des Reaktionskolbens und der Leitung zum Tank ein Abschneideventil zur Begrenzung des maximalen Reaktionsdruckes einzuschalten.

Weiterhin wird vorgeschlagen, den Reaktionsraum und den Rücklauf mit einer Entlastungsbohrung im Abdichtkolben zu verbinden.

Zur Abdichtung des Reaktionsraumes hat es sich als zweckmäßig erwiesen, zwischen der Eingangswelle und einem Lenkgehäuse einen Abdichtkolben anzuordnen.

Mit einer erfindungsgemäß ausgebildeten Servolenkvorrichtung ist es möglich, die Lenkkraft mit einer hydraulischen Reaktionseinrichtung in Abhängigkeit von unterschiedlichen Parametern wie beispielsweise der Fahrzeuggeschwindigkeit in allen Betriebszuständen genau zu regeln. Ein Vorteil dieser Servolenkeinrichtung mit hydraulischer Reaktionseinrichtung besteht darin, daß ein "fingerleichtes Parkieren" möglich ist, wenn der elektrohydraulische Wandler geschlossen ist und das Lenkmoment nur durch den Torsionsdrehstab bestimmt wird. Bei Geradeausfahrt ohne Lenkmanöver kann der Reaktionsdruck über eine entsprechend dimensionierte Entlastungsbohrung im Abdichtkolben auf Rücklaufdruckniveau konstant gehalten werden. Wenn jedoch Lenkmanöver eingeleitet werden, bewirkt der dann erhöhte Systemdruck abhängig von der Öffnung des EHW einen entsprechenden Reaktionsdruck und somit ein Rückwirkmoment auf die Eingangswelle, welches dem Eingangsmoment und dem dadurch erzeugten Systemdruck entgegenwirkt.
Weiterhin wird keine Druckfeder mehr benötigt, um den Reaktionskolben zu beaufschlagen. Es kann jedoch anstelle dessen eine Hilfsfeder eingesetzt werden. Die Torsionssteifigkeit aus Torsionsdrehstab und Hilfsfeder kann dabei so aufgeteilt werden, daß durch die Hilfsfeder eine einstellbare positive Zentrierung des Lenkventils erreicht wird. Dazu wird die Torsionssteifigkeit des Torsionsdrehstabes um den Anteil der Hilfsfeder zurückgenommen. Die Hilfsfeder kann alternativ auch so ausgelegt werden, daß sie allein die Torsionssteifigkeit der mechanischen Grundlast beschreibt. In diesem Fall kann auf den Torsionsdrehstab völlig verzichtet werden.

Weitere Einzelheiten und Vorteile ergeben sich aus der nachfolgenden Beschreibung der zugehörigen Zeichnungen, in denen eine erfindungsgemäß ausgebildete Servolenkvorrichtung mit einem hydraulischen Schaltplan schematisch dargestellt worden ist. in den Zeichnungen zeigen:

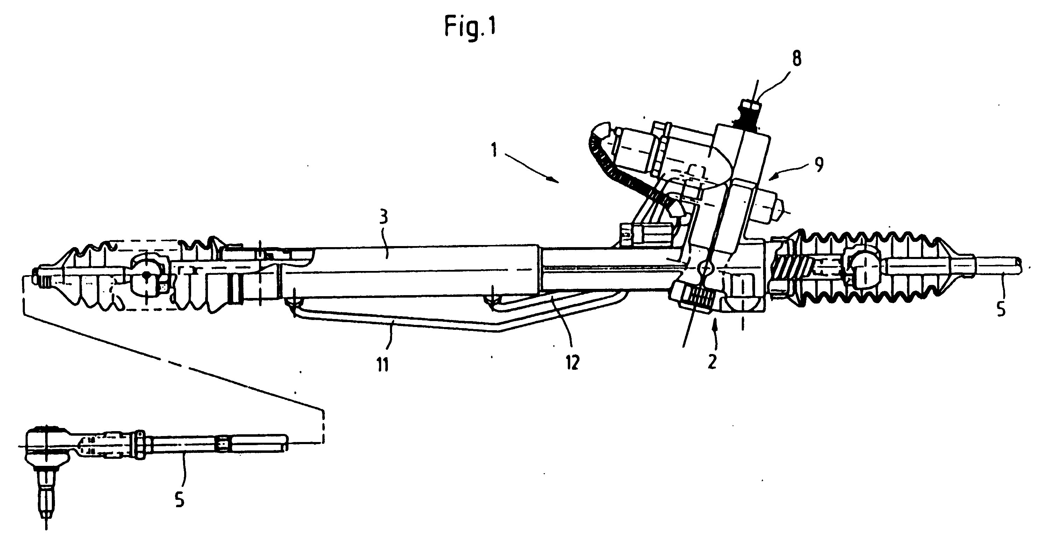

- Fig. 1: eine Servolenkeinrichtung in Ansicht;

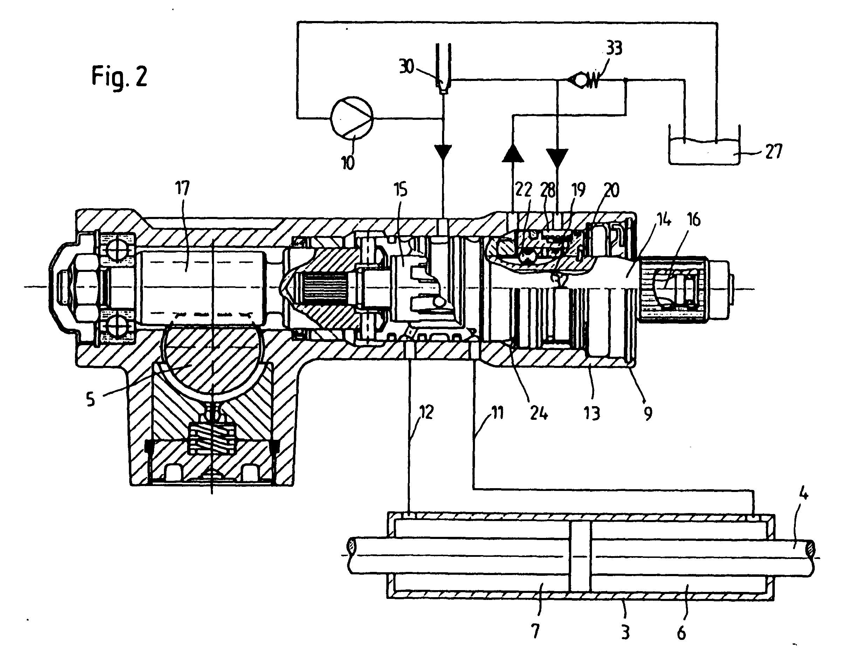

- Fig. 2: ein Lenkgehäuse der Servolenkeinrichtung im Längsschnitt;

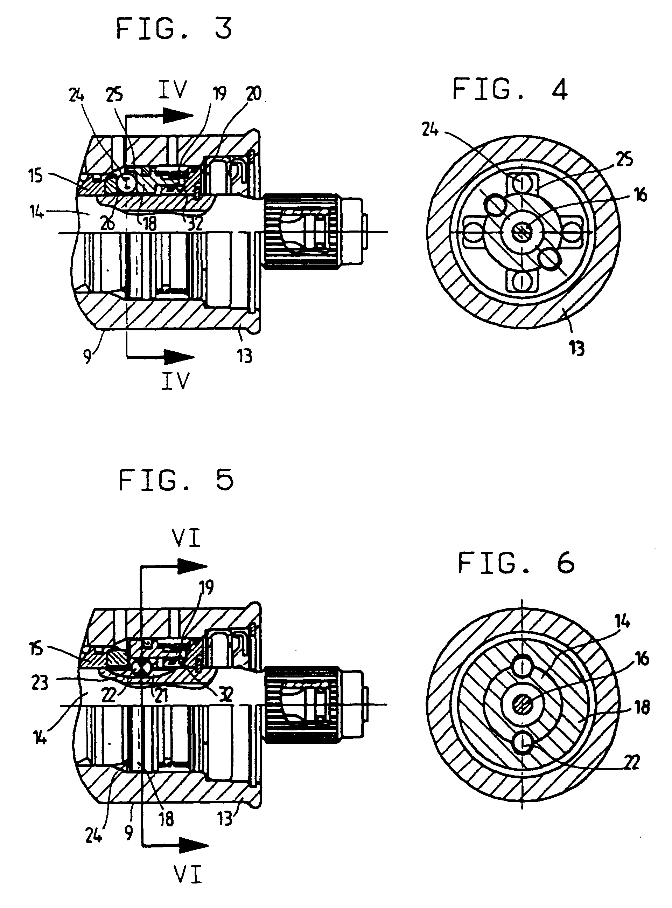

- Fig. 3: einen Abschnitt des Lenkgehäuses mit einer elastischen Drehmitnahme zwischen Steuerhülse und Reaktionskolben im Längsschnitt;
- Fig. 4: denselben Abschnitt entlang der Linie IV-IV in Fig. 3 geschnitten;
- Fig. 5: einen Abschnitt des Lenkgehäuses mit einer axial beweglichen Drehfixierung eines Reaktionskolbens auf einer Steuerhülse im Längsschnitt;
- Fig. 6: denselben Abschnitt entlang der Linie VI-VI in Fig. 5 geschnitten;

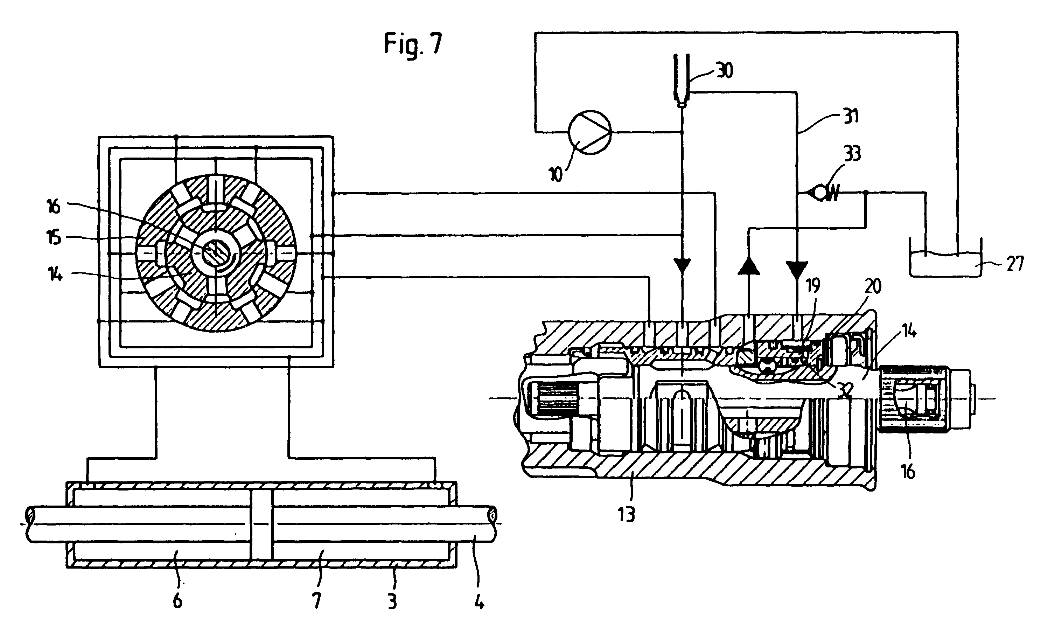

- Fig. 7: einen hydraulischen Schaltplan für die Servolenkvorrichtung;
- Fig. 8: ein Kennlinien-Diagramm für die Servolenkvorrichtung.

Eine Servolenkvorrichtung 1 wird in Verbindung mit einer mechanischen Lenkung 2 benutzt, um das an einem Lenkrad aufzubringende Lenkmoment zu reduzieren. Dies geschieht mittels eines Servozylinders 3, dessen Kolbenstange 4 mit einer Spurstange 5 verbunden ist. Die beiden Kammern 6 und 7 des Servozylinders 3 werden über ein auf einer Lenksäule 8 angeordnetes Drehschieberventil 9 in Abhängigkeit vom Lenkeinschlag von einer Pumpe 10 durch Leitungen 11,12 mit Drucköl beaufschlagt.

Das Drehschieberventil 9 herkömmlicher Konstruktion besteht aus einem fahrgestellfesten Lenkgehäuse 13 mit einer darin angeordneten Eingangswelle 14 und einer darauf gelagerten Steuerhülse 15. Beim Aufbringen eines Drehmomentes über die Lenksäule 8 kann die Eingangswelle 14 in beiden Richtungen um einen Winkel von ca. 3 bis 4° verdreht werden. Dieser Drehbewegung wirkt das Torsionsmoment eines Drehstabes 16 entgegen, der sowohl mit der Eingangswelle 14 als auch mit einem Antriebsritzel 17 verbunden ist, welches über eine Zahnstange die Spurstange 5 bewegt.

Um die gewünschte Variation des Lenkmomentes in Abhängigkeit von der Geschwindigkeit zu erreichen, nämlich ein geringes Lenkmoment beim Parkieren und ein zunehmendes Lenkmoment beim Erhöhen der Geschwindigkeit, wird über eine im folgenden beschriebene Vorrichtung das gewünschte Lenkmoment zum Verdrehen der Eingangswelle 14 im Verhältnis zur Steuerhülse 15 einstellbar gemacht. Zwischen der Eingangswelle 14 und der Steuerhülse 15 ist eine axial bewegliche und gleichzeitig elastische Drehmitnahme angeordnet, mit welcher der Drehstab 16, welcher sonst allein das Lenkmoment bestimmen würde, überbrückt werden kann.

In einem Ringraum zwischen dem Lenkgehäuse 13 und der Eingangswelle 14 ist ein Reaktionskolben 18 axial beweglich gelagert. Die axial bewegliche Fixierung des Reaktionskolbens 18 mit der Eingangswelle 14 besteht aus in der Eingangswelle 14 angeordneten Längsnuten 21 und in diesen gelagerten Kugeln 22, die in offene Längsnuten 23 des Reaktionskolbens 18 eingreifen.

Die elastische Drehmitnahme zwischen dem Reaktionskolben 18 und der Steuerhülse 15 besteht aus zwischen deren Stirnseiten angeordneten Kugeln 24, die sich beiderseits in V-förmigen Ausnehmungen 25,26 abstützen.

Bei Auslösen des Ventils bei erhöhter Geschwindigkeit drückt der Reaktionsdruck den Reaktionskolben 18 über die Kugeln 24 gegen die Steuerhülse 15 und bewirkt so ein Rückwirkmoment auf die Eingangswelle 14.

Beim Parkieren ist das Lenkmoment nur durch den Drehstab 16 bestimmt.

Um eine verbesserte Information über den Fahrbahnkontakt zu vermitteln, ist zwischen dem Pumpenzulauf zum Ventil und einem Reaktionsraum 28 ein in Abhängigkeit von Parametern wie z.B. der Fahrzeuggeschwindigkeit, dem Lenkeinschlag oder der Gierbeschleunigung variabel regelbarer elektrohydraulischer Wandler 30 eingeschaltet. Der maximale Reaktionsdruck wird mit einem Abschneideventil ASV begrenzt, welches die Leitung 31 mit dem Tank 27 verbindet.

Der Rücklauf des Drucköles aus dem Servozylinder 3 und dem Drehschieberventil erfolgt über die Leitung PR zum Tank 27. Mit dem Tank 27 ist auch eine Entlastungsbohrung 32 für den Reaktionsraum 28 in dem Abdichtkolben 14 verbunden.

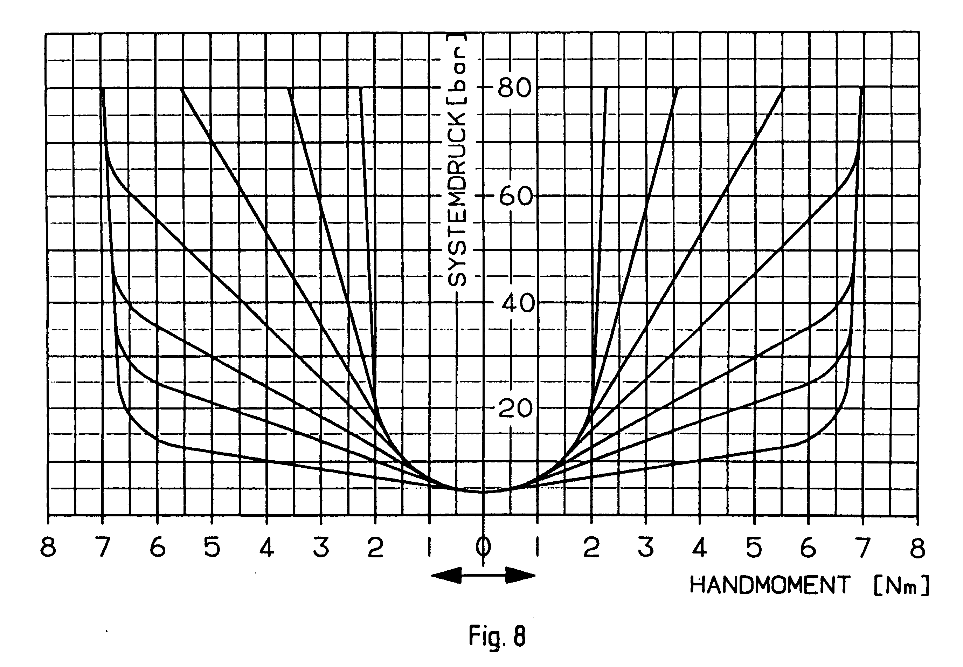

Beim Parkieren kann durch Schließen des EHW der Reaktionsdruck auf Rücklaufdruck reduziert und so ein "fingerleichtes" Steuern gewährleistet werden. Bei Geradeausfahrt ohne Lenkmanöver wird der Reaktionsdruck im Reaktionsraum 28 auch über die Entlastungsbohrung 32 auf Rücklaufniveau gehalten. Werden aber Lenkmanöver eingeleitet, dann bewirkt der erhöhte Systemdruck über den EHW 30 einen Rückwirkdruck auf den Reaktionskolben 18 und somit ein Rückwirkmoment, welches dem Eingangsmoment entgegen wirkt. Diese hydraulische Reaktion kann nach dem Kennlinien-Diagramm gemäß Fig. 8 dazu benutzt werden, die Servounterstützung zurückzunehmen und den Kontakt zwischen Lenkrad und Fahrbahn zu verbessern.

Das Abschneideventil ASV begrenzt den maximalen Rückwirkdruck im Reaktionsraum 28 und damit auch ein weiteres Ansteigen des Rückwirkmomentes. Dadurch wird das maximal aufzubringende Lenkmoment begrenzt und bei höheren Geschwindigkeiten sicher gestellt, daß bei Bedarf, beispielsweise einem Ausweichmanöver, Reifenschaden etc. immer genügend Servowirkung zur Verfügung steht.

### Bezugszeichenliste

- 1: Servolenkvorrichtung
- 2: Lenkung
- 3: Servozylinder
- 4: Kolbenstange
- 5: Spurstange
- 6: Kammer
- 7: Kammer
- 8: Lenksäule
- 9: Drehschieberventil
- 10: Pumpe
- 11: Leitung
- 12: Leitung
- 13: Lenkgehäuse
- 14: Eingangswelle
- 15: Steuerhülse
- 16: Drehstab
- 17: Antriebsritzel
- 18: Reaktionskolben
- 19: Hilfsfedern
- 20: Abdichtkolben
- 21: Längsnuten
- 22: Kugel
- 23: Längsnut
- 24: Kugel
- 25: Ausnehmungen
- 26: Ausnehmungen
- 27: Tank
- 28: Reaktionsraum
- 30: elektrohydraulischer Wandler
- 31: Leitung
- 32: Entlastungsbohrung
- 33: Abschneideventeil
- 35: Leitung
- PR: Rücklaufdruck
- PRST: Steuerdruck Rücklauf
- PSYST: Systemdruck
- PHR: Reaktionsdruck

## Patentansprüche

1. Servolenkvorrichtung zum Zuführen von Drucköl an linke und rechte Kammern (6,7) eines Servozylinders (3) über ein Drehschieberventil (9) mit einer Pumpe (10), wobei zwischen einer Eingangswelle (14) und einer Steuerhülse (15) des Drehschieberventiles (9) ein auf der Vorderseite mit einem Rücklaufdruck beaufschlagbarer Reaktionskolben (18) eingeschaltet ist, der axial beweglich und drehfest auf der Eingangswelle (14) gelagert und über eine elastische Drehmitnahme mit der Steuerhülse (15) verbunden ist, wobei auf der Rückseite eines Abdichtkolbens (20) in der Eingangswelle (14) eine Leckölbohrung angeordnet ist,
**dadurch gekennzeichnet,**
**daß** der Reaktionskolben (18) auf einer Rückseite mit parameterabhängig geregeltem Reaktionsdruck beaufschlagbar und in eine Leitung (31) zwischen der Pumpe (10) und der Rückseite des Reaktionskolbens (18) ein elektrohydraulischer Wandler EHW (30) zur Regelung des Reaktionsmoments durch das Verhältnis voll Rücklaufdruck und geregeltem Reaktionsdruck eingeschaltet ist.

2. Servolenkvorrichtung nach Anspruch 1, **dadurch gekennzeichnet,**
**daß** zwischen der Leitung (31) zur Rückseite des Reaktionskolbens (18) und der Leitung zum Tank (27) ein Abschneideventil ASV (33) zur Begrenzung des maximalen Reaktionsdruckes eingeschaltet ist.

3. Servolenkvorrichtung nach Anspruch 1, **dadurch gekennzeichnet,**
**daß** zwischen einem Reaktionsraum (28) und dem Innenraum der Eingangswelle (14) eine Entlastungsbohrung (32) angeordnet ist.

## Claims

1. Power steering mechanism for supplying pressure oil to left and right chambers (6, 7) of a servo-cylinder (3) via a rotary slide valve (9) with a pump (10), there being disposed between an input shaft (14) and a control sleeve (15) of the rotary slide valve (9) a reaction piston (18), which is loadable at the front end by a return pressure, supported in an axially movable and non-rotatable manner on the input shaft (14) and connected by a resilient rotational coupling to the control sleeve (15), wherein a leakage oil bore is disposed at the rear end of a sealing piston (20) in the input shaft (14),
**characterized in**
**that** the reaction piston (18) is loadable at a rear end with parameter-dependently regulated reaction pressure and an electro-hydraulic converter EHC (30) for regulating the reaction torque by means of the ratio of return pressure and regulated reaction pressure is inserted into a line (31) between the pump (10) and the rear end of the reaction piston (18).

2. Power steering mechanism according to claim 1,
**characterized in that** a cut-off valve ASV (33) for limiting the maximum reaction pressure is inserted between the line (31) leading to the rear end of the reaction piston (18) and the line leading to the tank (27).

3. Power steering mechanism according to claim 1,
**characterized in that** a relief bore (32) is disposed between a reaction chamber (28) and the interior of the input shaft (14).

## Revendications

1. Dispositif pour une direction assistée servant à amener de l'huile sous pression aux chambres gauche et droite (6, 7) d'un cylindre assisté (3) au moyen d'une vanne à tiroir rotatif (9) avec une pompe (10), un piston à réaction (18), qui peut être sollicité sur la face antérieure par une pression de retour, étant inséré entre un arbre d'entrée (14) et un manchon de commande (15) de la vanne à tiroir rotatif (9), piston à réaction (18) qui est monté de façon mobile dans le sens axial et de façon solidaire en rotation sur l'arbre d'entrée (14), et est relié, à l'aide d'un moyen d'entraînement élastique en rotation, au manchon de commande (15), un trou d'huile de fuite étant aménagé, à la face arrière d'un piston d'étanchéité (20), dans l'arbre d'entrée (14),
**caractérisé en ce que** le piston à réaction (18) peut être sollicité sur une face arrière par une pression de réaction, réglée en fonction de paramètres, et **en ce qu'**un convertisseur électrohydraulique EHW (30), qui sert au réglage du couple de réaction par le rapport entre la pression de retour et la pression réglée de réaction, est inséré dans une conduite (31) entre la pompe (10) et la face arrière du piston à réaction (18).

2. Dispositif pour une direction assistée selon la revendication 1, **caractérisé en ce que** l'on insère, entre la conduite (31) qui va vers la face arrière du piston à réaction (18) et la conduite qui va au réservoir (27), une vanne de coupure ASV (33) servant à limiter la pression maximale de réaction.

3. Dispositif pour une direction assistée selon la revendication 1, **caractérisé en ce que** l'on dispose, entre une chambre de réaction (28) et la chambre intérieure de l'arbre d'entrée (14), un trou de décharge (32).
